# EUROPEAN PATENT APPLICATION

(11) **EP 2 720 133 A2**
(43) Date of publication of application: **16.04.2014**
(21) Application number: 13188364.7
(22) Date of filing: 11.10.2013
(51) Int. Cl.: G06F 3/0488

(54) **Apparatus and method for unlocking screen and executing operation in a portable terminal**

(30) Priority: 12.10.2012 KR 20120113611
(71) Applicant: Samsung Electronics Co., Ltd, Gyeonggi-do 443-742 (KR)
(72) Inventor: Park, Sungdeuk, 443-742 Gyeonggi-do (KR)
(74) Representative: Nederlandsch Octrooibureau

(57) **Abstract**

The present invention relates to an apparatus and a method for unlocking screen in a portable terminal. The method for unlocking operation includes: detecting at least two touch event inputs in sequence on the touch screen during a locking screen mode; converting the at least two touch event inputs in sequence to authentication information; determining whether the converted authentication information is identical to a preset unlocking authentication information; and unlocking the screen when the converted authentication information is identical to the preset unlocking authentication information.

## Description

### BACKGROUND OF THE INVENTION

### Field of the Invention

The present disclosure relates to an apparatus and a method for providing an unlocking operation in a portable terminal.

### Description of the Related Art

A portable terminal enables voice and data communication as well as storing personal information. To ensure security, a conventional portable terminal is provided with a locking function to protect personal information saved in the portable terminal. To access, the conventional portable terminal provides various unlocking methods such as a pin lock, pattern lock, circle lock, and password lock. However, demands for a new and improved unlocking method are continuously growing.

### SUMMARY

The present invention provides an apparatus and a method for enabling an unlocking operation in a portable terminal in order to improve a user's convenience by using a simpler input touch event.

Another aspect of the present invention is to provide an apparatus and a method for providing an unlocking operation in a portable terminal to enable an execution of a specific application through an input of a simple touch event during a locking screen.

A method for unlocking screen in a portable terminal according to an exemplary embodiment of the present invention includes:
detecting at least two touch event inputs in sequence on the touch screen during a locking screen mode; converting the at least two touch event inputs in sequence to authentication information; determining whether the converted authentication information is identical to a preset unlocking authentication information; and unlocking the screen when the converted authentication information is identical to the unlocking authentication information.

An apparatus for unlocking screen in a portable terminal according to another exemplary embodiment of the present invention includes: a touch screen for displaying a locking screen; and a control unit controlling the touch screen for detecting at least two touch event inputs, in sequence, converting the at least touch event inputs in sequence to authentication information, determining whether the converted authentication information is identical to a preset unlocking authentication information, and unlocking the screen when the converted authentication information is identical to the unlocking authentication information.

A method for unlocking screen in a portable terminal according to another exemplary embodiment of the present invention includes: converting a touch event input detected, in sequence, on the touch screen during a locking screen mode into authentication information; identifying whether the converted authentication information is identical to a preset unlocking authentication information when no further touch event is detected after at least two consecutive touch event inputs; unlocking the screen when the converted authentication information is identical to the preset unlocking authentication information.

An apparatus for unlocking screen in a portable terminal according to another exemplary embodiment of the present invention includes: a touch screen for displaying a locking screen; and a control unit converting a touch event input detected on the touch screen, in sequence, to authentication information, identifying whether the converted authentication information is identical to a preset unlocking authentication when no further touch event is detected after at least two consecutive touch event inputs, unlocking the screen when the converted authentication information is identical to the unlocking authentication information.

### BRIEF DESCRIPTION OF THE DRAWINGS

The features and advantages of the present invention will be more apparent from the following detailed description in conjunction with the accompanying drawings, in which:
FIG. 1 is a block diagram showing a schematic configuration of a portable terminal according to an exemplary embodiment of the present invention;
FIG. 2 is a flow chart showing a procedure of unlocking operation through a touch event input according to an exemplary embodiment of the present invention.
FIG. 3 is an example drawing showing a method of unlocking operation through a touch event input according to an exemplary embodiment of the present invention;
FIG. 4 is an example drawing showing a short-cut unlocking method for executing a specific application directly through a touch event input in a locking screen;
FIG. 5 is a flow chart showing a procedure of setting unlocking authentication information for unlocking according to an exemplary embodiment of the present invention;
FIG. 6 is an example drawing showing a method of setting unlocking authentication information through a touch event input according to an exemplary embodiment of the present invention;
FIG. 7 is an example drawing showing a method of setting unlocking authentication information by using a numeral key according to an exemplary embodiment of the present invention; and
FIG. 8 is a flow chart showing a procedure of setting short-cut unlocking authentication information for executing a specific application according to an exemplary embodiment of the present invention.

### DETAILED DESCRIPTION

Hereinafter, exemplary embodiments of the present invention are described in detail with reference to the accompanying drawings. The same reference symbols are used throughout the drawings to refer to the same or like parts. For the purposes of clarity and simplicity, detailed descriptions of well-known functions and structures incorporated herein may be omitted to avoid obscuring the subject matter of the present invention.

In the present invention, 'lock state' is used for protecting an unintended or unauthenticated usage of a portable terminal, or for activation or deactivation of a function of the portable terminal. If the portable terminal is in a lock state, the portable terminal may respond to a limited function such as power on/off until being unlocked by a predefined unlocking method. In addition, the portable terminal may output a locking screen notifying a lock state and receive a user input for unlocking through the locking screen.

The portable terminal according to the present invention is a terminal providing a locking function and may be a mobile phone, smart phone, PDA (Personal Digital Assistant), tablet personnel computer, or PMP (Portable Multimedia Player).

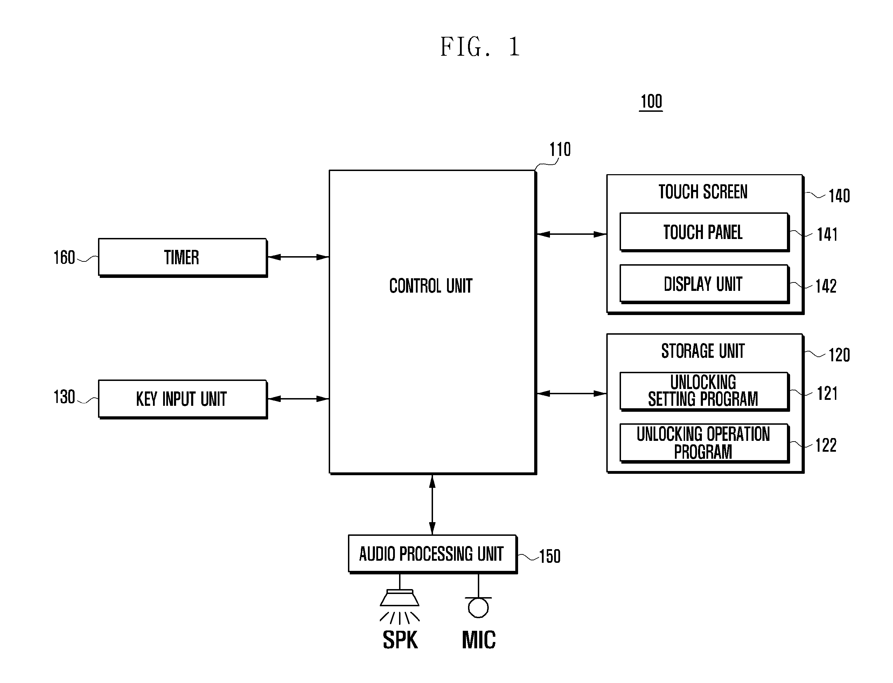

FIG. 1 is a block diagram showing a schematic configuration of a portable terminal according to an exemplary embodiment of the present invention.

Referring to FIG. 1, the portable terminal 100 according to an exemplary embodiment of the present invention may include a timer 160, audio processing unit 150, touch screen 140, key input unit 130, storage unit 120, and control unit 110.

In operation, the timer 160 counts down a preset time (for example, 30 second) to activate an idle state, dormancy state, or lock state, and transmits an interrupt signal to the control unit 110 to request for entering a corresponding state (an idle state, dormancy state, or lock state), if the countdown is completed. If at least two times of touch event input is received, the timer 160 counts down a preset touch input completion time. If the countdown is completed, the timer 160 transmits the completion of countdown to the control unit 110. The control unit 110 then identifies it as a touch event input for unlocking is completed, and decides whether execution of unlocking by comparing the at least two times of touch event input with stored unlocking authentication information.

The audio processing unit 150 includes a speaker (SPK) outputting audio data transmitted and received during communication, audio data attached to a message, and audio data stored in the storage unit 120, and a microphone (MIC) collecting a user's voice or other audio signal during communication. In particular, the audio processing unit 150 according to the present invention may output a corresponding sound effect if a signal requesting for unlocking or a signal attempting to unlock is detected. The audio processing unit 150 may output a corresponding sound effect notifying the success or fail of the unlocking outcome.

The touch screen 140 includes a touch panel 141 and a display unit 142, and may have a structure of disposing the touch panel 141 in front of the display unit 142.

The touch panel 141 includes a plurality of sensors arranged in a matrix form, and is disposed at the upper surface or at the lower surface of the display unit 142. The touch panel 141 generates a touch event if a touch input means (for example, a finger, stylus, and electronic pen) contacts with or approaches to the touch panel 141, and transmits the generated touch event to the control unit 110. The touch panel 141 detects a touch input by a user, and identifies the type of the detected touch event. In particular, the touch panel 141 according to the present invention generates an unlocking touch event for trying to unlock. The unlocking touch event may be generated at any location on the touch panel 141. The unlocking touch event includes at least one of a single touch and a multi touch. The single touch is a touch event which a user touches a point on a screen by using a touch input means (for example, a finger, stylus, or electronic pen). The multi touch is a touch event which a user touches a plurality of points on a screen in a preset time interval by using a touch input means.

The display unit 142 displays various menus of the portable terminal 100, information input by a user or information provided to the user. Namely, the display unit 142 provides various screens such as a locking screen, main menu screen, home screen, and application screen, according to the usage of the portable terminal 100. The display unit 142 may be formed with an LCD (Liquid Crystal Display) or an OLED (Organic Light Emitted Diode). The display unit 142 may be disposed at the upper surface or at the lower surface of the touch panel 141. In particular, the display unit 142 according to the present invention may output a screen before entering a locking screen when unlocking is performed. Alternatively, the display unit 142 may output a screen for executing a specific application when short-cut unlocking is to be performed. Further, the display unit 142 may display an image notifying an input of touch event (for example, a circular image centered at a touch point) or an image warning that an input touch event is not identical to unlocking authentication information.

The key input unit 130 generates an input signal for controlling the portable terminal 100 by receiving a user's key operation, and transmits it to the control unit 110. The key input unit 130 may be configured with a keypad of a button type including a numeral key, direction key, and function key formed at a side of the portable terminal 100. For example, the function key may include a power on/off key of the portable terminal 100 and a volume key for controlling the intensity of a sound. Further, the key input unit 130 may include a home key disposed at the lower side of the portable terminal 100.

The storage unit 120 stores at least one program required for operating a function according to an exemplary embodiment of the present invention, data generated by a user, and message communicating with a network, and data generated by execution of an application program. The storage unit 120 includes a program area and a data area.

The data area stores data downloaded from an external source and attribute information of the data according to the usage of the portable terminal 100.

The program area store an OS (Operating System) for booting the portable terminal 100 and operating the aforementioned components, and downloaded and installed applications. In particular, the program area according to the present invention stores an unlocking setting program 121 and an unlocking operation program 122.

The unlocking setting program 121 includes a routine for setting information required for unlocking of the portable terminal 100. For example, the unlocking setting program 121 supports setting a limit number of input for unlocking, unlocking authentication information, and short-cut unlocking authentication information.

The unlocking operation program 122 supports unlocking of the portable terminal 100 according to a user's input of a touch event, and includes an unlocking decision routine and an unlocking routine.

The unlocking decision routine may be programed to decide whether to unlock the portable terminal 100 or not according to a touch event input detected a locking screen mode. For example, if a touch event input is received, the unlocking decision routine converts the received touch event to authentication information and compares the converted authentication information with preset unlocking authentication information. Here, the unlocking decision routine converts the received touch event to the authentication information only if the touch event is received as many as a preset limit number of input. Alternatively, the unlocking decision routine may convert a touch event to authentication information every time when the touch event is input, and compare the converted authentication information with unlocking authentication information if no touch event input is received for a preset input completion time or if a signal of input completion is received.

Subsequently, the unlocking decision routine may allow or refuse the unlocking of the portable terminal 100 according to the comparison outcome. Further, the unlocking decision routine may identify whether the input touch event is a short-cut command for executing a specific application or not during a locking screen mode.

The unlocking routine may be programmed to unlock the portable terminal 100 according to a user's command of unlocking. Here, the unlocking routine may identify a previous state (a state before entering a locking state) of the portable terminal 100 and support to display a corresponding screen. For example, the unlocking routine may support to display a main menu screen, home screen, or application execution screen if a touch event for unlocking is input. Further, the unlocking routine may support to unlock the portable terminal 100 and execute a specific application if a touch event for a short-cut unlocking of the specific application is input.

The control unit 110 controls general operation of the portable terminal 100 and a signal flow between internal blocks of the portable terminal 100, and performs a data processing function. For example, the control unit 110 may include a CPU (Central Processing Unit), MPU (Micro Processor Unit), or application processor. In particular, the control unit 110 according to the present invention controls an unlocking function by using a touch event. For example, if at least two times of touch event input is detected, the control unit 110 identifies whether the number of touch event input is identical to a preset limit number of input. Here, the at least two times of touch event input may include at least one of a single touch and a multi touch. If the number of touch event input is identical to the preset limit number of input, the control unit 110 converts the touch event input to authentication information and identifies whether the converted authentication information is identical to preset unlocking authentication information. If so, the control unit 110 unlocks the portable terminal 100. If the converted authentication information is not identical to the preset unlocking authentication information, the control unit 110 may process an error handling (for example, outputting a warning message). The converted authentication information is numeral information converted from a touch point. For example, the converted authentication information of a single touch is '1', the converted authentication information of a multi touch of touching 2 points (hereafter, 2 points touch) is '2', and the converted authentication information of a multi touch of touching 3 points (hereafter, 3 points touch) is '3'. Namely, if a single touch, 2 points touch and 3 points touch are input sequentially, the converted authentication information becomes '123'.

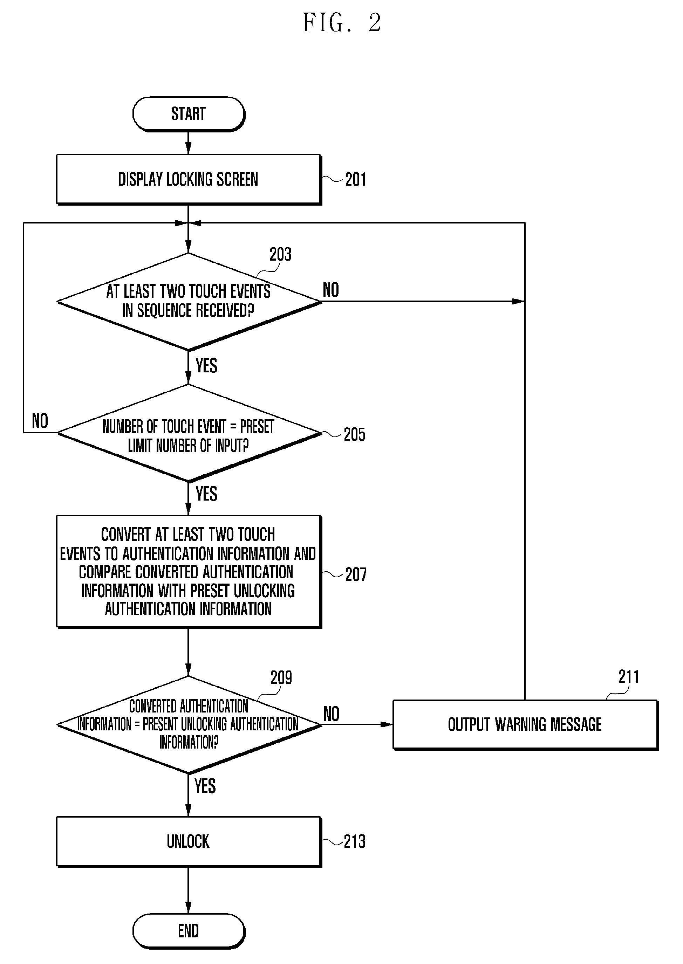

The control unit 110 may identify whether a touch event for a short-cut unlocking of a specific application is input. If a touch event for the short-cut unlocking is input, the control unit 110 unlocks the portable terminal 100 and executes the specific application. Further, the control unit 110 controls settings of the unlocking authentication information or the short-cut unlocking authentication information. Hereafter, a procedure of unlocking the screen by using a touch event and a method of setting the short-cut unlocking authentication information will be described in more detail referring to FIGS. 2 to 8.

FIG. 2 is a flow chart showing a procedure of unlocking operation through a touch event input according to an exemplary embodiment of the present invention.

Referring to FIGS. 1 and 2, the control unit 110 according to an exemplary embodiment of the present invention controls the display unit to display a locking screen (201). For example, the control unit 110 turns the display unit 142 on and controls to display a locking screen, if an input such as a home button and a menu button is detected in a turn-off state of the display unit 142.

Subsequently, the control unit 110 identifies whether at least two touch event inputs, in sequence, is received in the locking screen (203). The at least two touch events includes at least one of a single touch and a multi touch. Here, the control unit 110 may provide additional effect according to the input of the touch event. For example, the control unit 110 may provide a user with a visual effect, auditory effect, and tactile effect. In more detail, if a specific point is touched, the control unit 110 outputs a circle image in a specific color according to the touch point. Namely, the control unit 110 provides a visual effect so that the user can recognize the input of touch event. The control unit 110 may output an image in various other shapes instead of the circle image. Similarly, the control unit 110 may provide an auditory effect and/or a tactile effect by outputting a sound and/or a vibration every time when the touch event input is detected. Examples of providing visual, auditory, and tactile effects are described above; however, the present invention is not limited to such examples.

If at least two touch event inputs, in sequence, is not received in the locking screen, the control unit 110 returns to Step 203. If the at least two touch event inputs is received in the locking screen, the control unit 110 identifies whether the number of touch event input is identical to a preset limit number of input (205). If the number of touch event input is not identical to the preset limit number of input, the control unit 110 returns to Step 203 and repeats the above procedure.

If the number of touch event inputs is identical to the preset limit number of input, the control unit 110 converts the received at least two touch event inputs, in sequence, to authentication information and compares the converted authentication information with preset unlocking authentication information (207). The converted authentication information is information of numeral converted from the number of touch points. For example, a single touch event is converted to a numeral '1', a multi touch event of touching 2 points (2 point touch) is converted to a numeral '2', and a multi touch event of touching 3 points (3 point touch) is converted to a numeral '3'. For example, if the limit number of input is 3 and if three times of touch input correspond to a single touch, 3 point touch, and 2 point touch, the converted authentication information becomes '132'.

Subsequently, the control unit 110 identifies whether the converted authentication information is identical to preset unlocking authentication information (209). If the converted authentication information is not identical to the preset unlocking authentication information, the control unit 110 outputs a warning message (211). Namely, the control unit 110 controls to output a warning message windows or a warning message notice (sound and/or vibration), if the converted authentication information is not identical to the preset unlocking authentication information. If the converted authentication information is identical to the preset unlocking authentication information, the control unit 110 unlocks the portable terminal 100 (213). If the unlocking is done, the control unit 110 controls to the display unit 142 to output a screen before entering the locking screen (e.g. one of a main menu screen, home screen, and application execution screen).

Even though not shown in FIG. 2, in the locking screen, if the number of discordance between the converted authentication information and the unlocking authentication information is greater than a specific number (for example, 5), the control unit 110 may enter a dormancy state (a state that a touch event cannot be input) for s predetermined time (for example, 30 seconds). After elapsing the predetermined time, the control unit 110 returns to Step 203 and repeats the above procedure.

An example of converting a touch event input to authentication information has been described for the case of the number of touch event input identical to the preset limit number of input; however, the present invention is not limited to the example. The control unit 110 according to another exemplary embodiment of the present invention may convert a touch event to authentication information every time when the touch event is input in a locking screen. Here, the control unit 110 decides whether unlocking by comparing the converted authentication information with stored unlocking authentication information, if no touch event is input for a predetermined time of touch input completion or if a preset setting completion key is input.

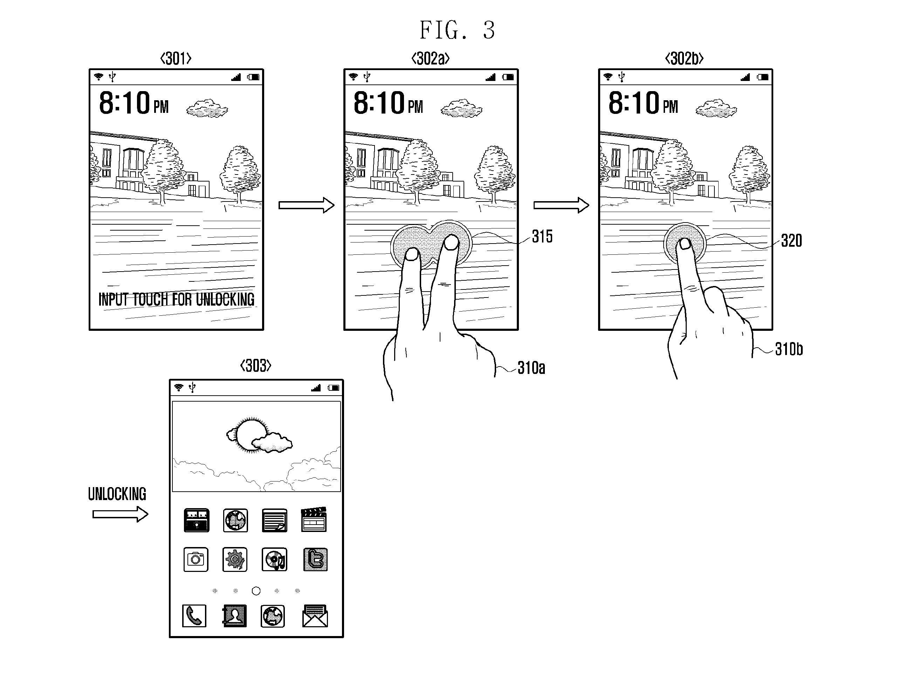

FIG. 3 is an example drawing showing a method of unlocking operation through a touch event input according to an exemplary embodiment of the present invention.

Referring to FIGS. 1 and 3, if a key input is detected in a state of the display unit 142 turned off, the control unit 110 turns the display unit 142 on, and controls to display a locking screen shown as Screen 301. The locking screen may include a time, date, and guide for unlocking in the back ground of a present locking image. The locking screen 301 is shown for illustrative example, thus the present invention should not be limited to the illustrative drawing.

In the locking screen, the control unit 110 may receive at least two times of touch event input. For example, the control unit 110 may detect a multi touch 315 and a single touch 320 input, in sequence, by user's fingers (310a and 310b) as shown in screens 302a and 302b. Here, the control unit 110 converts the detected touch event to authentication information. Namely, the control unit 110 converts the 2 points touch 315 of Screen 302a to a numeral '2' and a single touch 320 of Screen 302b to a numeral '1'. The control unit 110 identifies whether the converted authentication information '21' is identical to preset unlocking authentication information. The control unit 110 unlocks the portable terminal 100 and controls to output a home screen as shown in Screen 303, if the converted authentication information is identical to the unlocking authentication information. Here, the control unit 110 may controls to output not only a home screen but also a main menu screen and an application execution screen previously executed according to the state of the portable terminal 100 before entering a locking state.

If a touch event input is received, the control unit 110 provides a visual effect of notifying that the touch event input is received from the vicinity of fingers 310a and 310b as shown in Screens 302a and 302b. For example, the visual effect may be displayed as an image of a specific shape (for example, a circle, rectangular, and triangle) in the vicinity of the user's finger 310a and 310b. Further, the control unit 110 may controls to display a different background locking screen or the touched point in a specific color (for example, blue). If an incorrect touch event for unlocking is input, the control unit 110 controls to display the locking screen in a specific color (for example, red) for a predetermined time.

The control unit 110 may provide an auditory effect and a tactile effect to notify a touch event input. The auditory effect may be output as a preset sound effect when a touch event is received. For example, the control unit 110 may control an audio processing unit 150 to output a sound 'ding' for a single touch event and a sound 'ding dong' for a 2 points touch input. The control unit 110 may control the audio processing unit 150 to output a warning sound if the touch event input is incorrect. Further, the control unit 110 may control the audio processing unit 150 to output a sound notice of unlocking operation. The tactile effect may be output as a vibration of a specific pattern. However, the present invention is not limited to the above visual, auditory, and tactile effects.

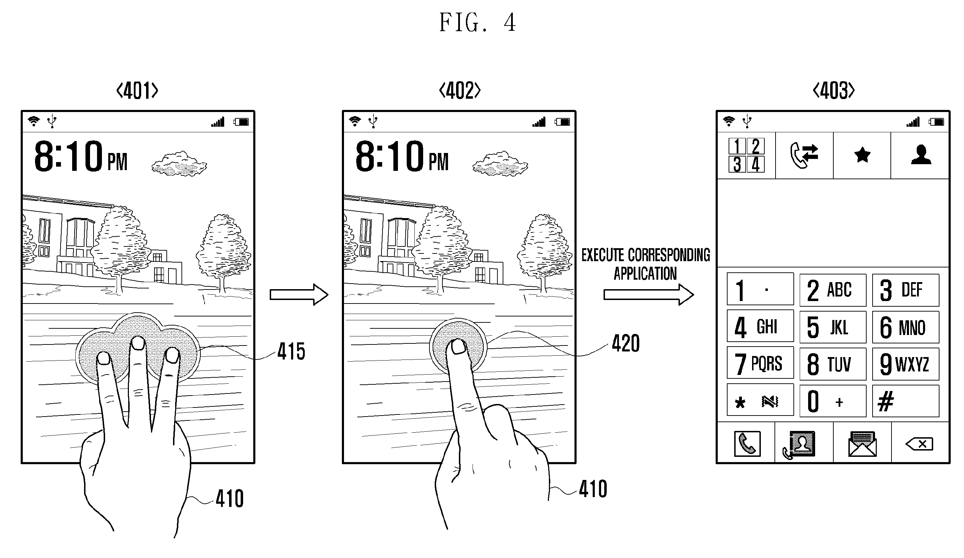

FIG. 4 is an example drawing showing a short-cut unlocking method for executing a specific application directly through a touch event input in a locking screen. Hereafter, the short-cut unlocking method will be described based on inputting two times of touch event.

Referring to FIG. 4, the control unit 110 receives at least two touch events in two different occasions, in sequence, during a locking screen. For example, the control unit 110 detects a multi touch 415 input by 3 fingers 410 as shown in Screen 401. Here, the control unit 110 calculates the number of touch points. The calculated number of touch is temporarily stored as authentication information in a buffer (not shown). Namely, if 3 points are touched as shown in Screen 401, the buffer stores a numeral '3' as authentication information.

The control unit 110 may detect a single touch 420 input by a finger 410 as shown in Screen 402. Here, the control unit 110 calculates the number of touch point of the single touch 420. The calculated number of touch point is temporarily stored in the buffer as authentication information. Namely, if a point is touched as shown in Screen 402, the buffer stores a numeral ' 1' as authentication information.

Subsequently, the control unit 110 compares the authentication information stored in the buffer with present short-cut unlocking authentication information, and unlocks the portable terminal and also executes a corresponding application if identical short-cut unlocking information exists. For example, the control unit 110 unlocks the portable terminal 100 and controls the display unit 142 to display an execution screen of a telephone application as shown in Screen 403.

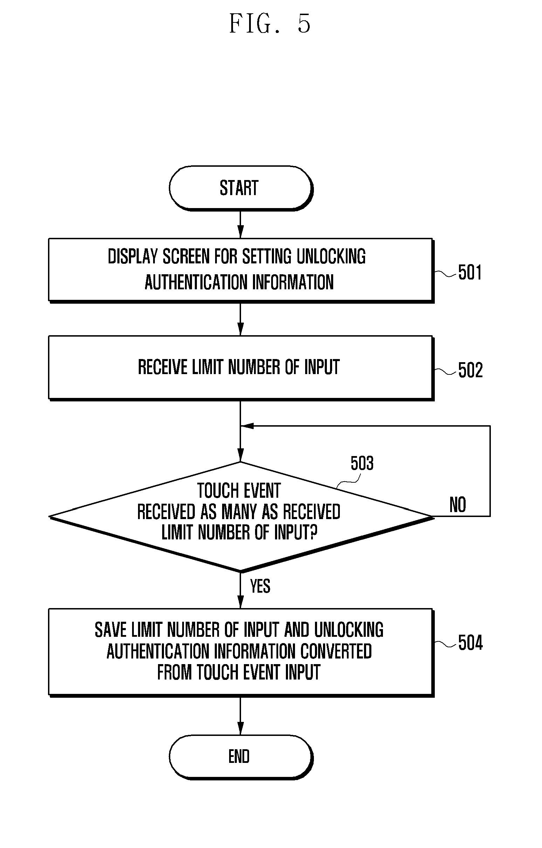

FIG. 5 is a flow chart showing a procedure of setting unlocking authentication information for unlocking according to an exemplary embodiment of the present invention.

Referring to FIGS. 1 and 5, the control unit 110 controls to display a screen for setting unlocking authentication information (501). If the screen for setting unlocking authentication information is displayed, the control unit 110 receives a limit number of input (502). Namely, a user may set a digit number of unlocking authentication information in Step 502. A greater digit number enhances security, however may cause inconvenience due to increased number of required inputs for unlocking. Step 502 may be omitted according to manufacturer's or user's intention. Namely, the digit number of unlocking authentication information may be fixed to a default value (for example, 4) or set by a separate menu.

Subsequently, if a limit number of input is received, the control unit 110 identifies whether touch event inputs are received as many as the limit number of input (503). If the touch event inputs are not received as many as the limit number of input, the control unit 110 remains in Step 503. If the touch event inputs are received as many as the limit number of input, the control unit 110 stores the limit number of input and the received touch event inputs as unlocking authentication information (504). Namely, the control unit 110 stores the limit number of input and the unlocking authentication information by converting the number of touch points of the received touch event to a numeral.

Even though not shown in FIG. 5, the Steps 503 and 504 may be repeated for a predetermined times (for example, two times). This is to prevent a problem of the user not recognizing stored unlocking information in a case that the unlocking authentication information is stored unintentionally. Here, the Step 504 may include a first storing step in which the authentication information of a numeral converted from the number of touch points of the touch event is stored in the buffer and a second storing step in which the limit number of input and the converted authentication information in the storage unit 120 if authentication information converted from the number of touch points of re-input touch event is identical to the temporarily stored authentication information.

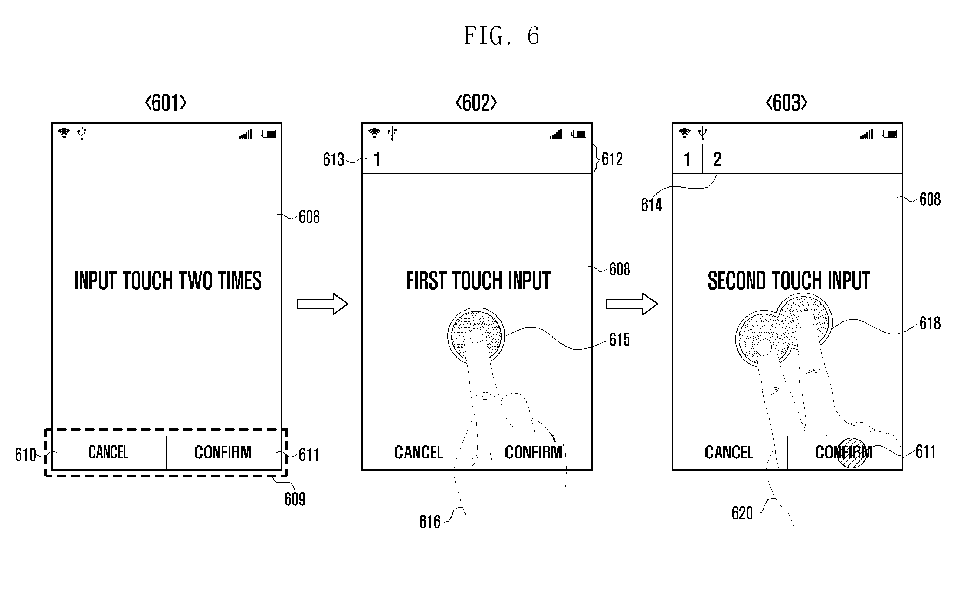

FIG. 6 is an example drawing showing a method of setting unlocking authentication information through a touch event input according to an exemplary embodiment of the present invention. Hereinafter, the method of setting unlocking authentication information according to an exemplary embodiment of the present invention will be described based on the limit number of input set to 'two times' for illustrative purposes only, thus should not limit the scope of the present invention.

Referring to FIG. 6, the control unit 110 controls the display unit 142 to display a screen interface for setting unlocking authentication information according to a user's request. The screen interface for setting unlocking authentication information includes a touch event input area 608 for inputting a touch event and a menu area 609 as shown in Screen 601. The touch event input area 608 is an area for receiving a touch event input for unlocking, and may include a message (for example, "input touch two times") requesting for a touch input as shown in Screen 601. The menu area 609 includes a cancellation menu 610 for returning to a previous step and a confirmation menu 611.

Subsequently, as shown in Screen 602, the user may touch the touch event input area 608 with a finger 616 (single touch). Here, the control unit 110 receives an input of a single touch 615 in the touch event input area 608. If a single touch is received, the control unit 110 generates an input information display area 612 at a side of the touch event input area 608, and controls to display numeral information 613 corresponding to the single touch 615 in the input information display area 612. The input single touch 615 is converted to a numeral '1', and temporarily saved in a buffer.

Subsequently, as shown in Screen 603, the control unit 110 receives a multi touch 618 input by the user's two fingers 620 through the touch event input area 608. Here, the control unit 110 converts the multi touch 618 to numeral information, and controls to display the converted numeral information 614 in the input information display area 612. Namely, the input information display area 612 displays numeral information '12' corresponding to the touch events input in Screens 602 and 603.

If an input of confirmation menu 611 is received, the control unit 110 saves the numeral information '12' displayed in the input information display area 612 as unlocking authentication information in the storage unit 120. The control unit 110 controls to redo the above procedure of setting unlocking authentication information, and saves unlocking authentication information in the storage unit 120 if the unlocking authentication information set in the redoing is identical to previously set unlocking authentication information.

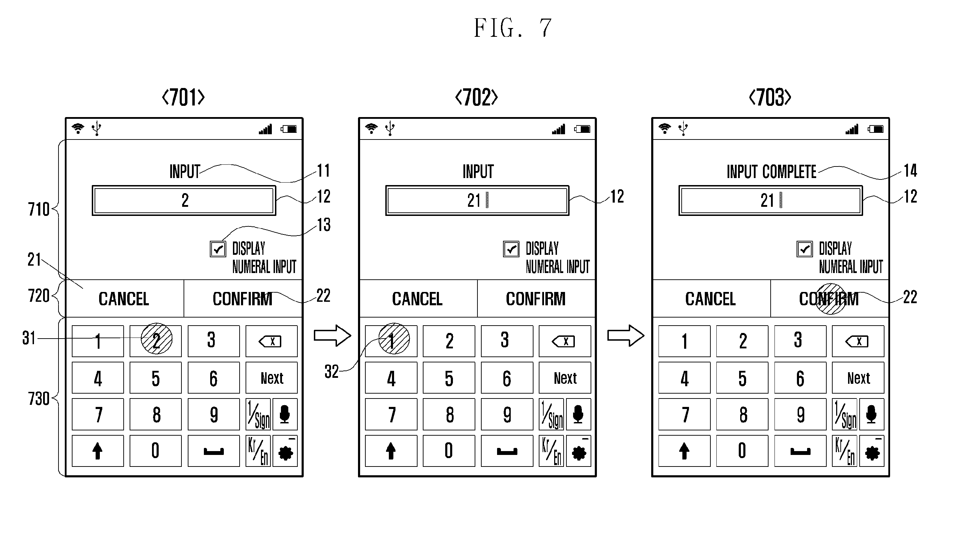

FIG. 7 is an example drawing showing a method of setting unlocking authentication information by using a numeral key according to an exemplary embodiment of the present invention. Hereinafter, the method of setting unlocking authentication information according to an exemplary embodiment of the present invention will be described based on the limit number of input set to two times.

Referring to FIG. 7, the control unit 110 controls the display unit 142 to display a screen interface for setting unlocking authentication information according to a user's request. The screen interface for setting unlocking authentication information includes an unlocking authentication information display area 710, menu area 720 having a cancellation menu 21 and a confirmation menu 22, and numeral keypad area 730 as shown in Screen 701.

The unlocking authentication information display area 710 may include a notifying message 11 (for example, "Input" and "Input Complete"), text box 12 for displaying a numeral input in the numeral keypad area 730, and numeral input display menu 13. The numeral input display menu 13 may be configured with a check box. If the numeral input display menu 13 is checked, a numeral input through the numeral keypad area 730 is displayed in the text box 12. If the numeral input display menu 13 is not checked, a numeral input through the numeral keypad area 730 is displayed as a special character (for example, '*') in the text box 12. This is to prevent the unlocking authentication information from being exposed to other persons.

Subsequently, the control unit 110 detects a numeral input in the numeral keypad area 730. For example, as shown in Screen 701, the control unit 110 detects an input of a button 31 corresponding to a numeral '2' in the numeral keypad area 730 in a state of the numeral input display menu 13 checked. Here, the control unit 110 controls to display the numeral '2' corresponding to the input of the button 31 in the text box 12.

Subsequently, as shown in Screen 702, the control unit 110 detects an input of a button 32 corresponding to a numeral '1' in the numeral keypad area 730. Here, the control unit 110 controls to display the numeral '1' corresponding to the button 32 in the text box 12. If the numeral input display menu 13 is not checked, the control unit 110 controls to display the numeral corresponding to the input of the buttons 31 and 32 as special characters of '**'.

Subsequently, as shown in Screen 703, the control unit 110 may substitute the notifying message of "Input" 11 to a new notifying message of "Input complete" 14, if the numeral keys are input as many as a preset limit number of input (for example, two times). If a touch of the confirmation menu 22 is detected, the control unit 110 saves the input numeral information '21' as unlocking authentication information in the storage unit 120. The control unit 110 controls to redo the above procedure of setting unlocking authentication information, and saves unlocking authentication information in the storage unit 120 if the unlocking authentication information set in the redoing is identical to previously set unlocking authentication information.

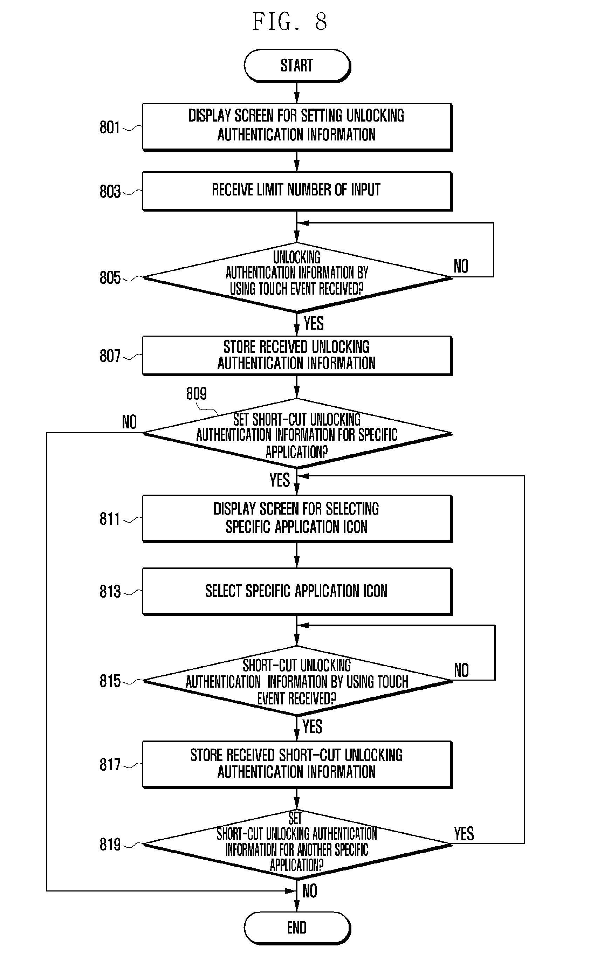

FIG. 8 is a flow chart showing a procedure of setting short-cut unlocking authentication information for executing a specific application according to an exemplary embodiment of the present invention.

Referring to FIG. 8, the control unit 110 controls the display unit 142 to display a screen for setting unlocking authentication information (801). If the screen for setting unlocking authentication information is displayed, the control unit 110 receives an input of a limit number of input (803). If a limit number of input is received, the control unit 110 identifies whether unlocking authentication information is received by using a touch event (805). Here, the similar procedure of receiving the unlocking authentication information by using a touch event has been described through FIGS. 5 to 7, and therefore detailed description on the procedure is omitted.

If unlocking authentication information by using a touch event is not received, the control unit 110 remains in Step 805. However, if unlocking authentication information by using a touch event is received, the control unit 110 saves the received unlocking authentication information (807).

Subsequently, the control unit 110 identifies whether a setting of short-cut unlocking authentication information for a specific application is requested (809). To this end, the control unit 110 may control to display a message notice window at a side of the screen whether setting of short-cut unlocking authentication information for a specific application is required or not. The message notice window may include a 'YES' menu and a 'NO' menu.

If the setting of short-cut unlocking authentication information for a specific application is not selected in Step 809, namely, if the 'NO' menu is selected, the control unit 110 terminates the setting of unlocking authentication information. In this case, the present invention provides setting of general unlocking authentication information releasing only the locked state. However, if the setting of short-cut unlocking authentication information for a specific application is selected in Step 809, namely, if the 'YES' menu is selected, the control unit 110 controls to display a screen for selecting a specific application icon (811). If the screen for selecting a specific application icon is displayed, the control unit 110 detects a selection of a specific application icon (813). If the selection of a specific application icon is detected, the control unit 110 controls to display a screen for setting short-cut unlocking authentication information.

The control unit 110 identifies whether short-cut unlocking authentication information by using a touch event is received (815). If the short-cut unlocking authentication information is not received, the control unit 110 remains in Step 815. If the short-cut unlocking authentication information is received, the control unit 110 stores the short-cut unlocking authentication information received (817). Accordingly, the present invention provides both setting of general unlocking authentication information releasing only the locked state and setting of short-cut unlocking authentication information enabling a direct execution of a specific application.

Thereafter, the control unit 110 identifies whether setting of short-cut unlocking authentication information for another specific application is requested (819). If the setting of short-cut unlocking authentication information for another specific application is requested, the control unit 110 returns to Step 811, and repeats the above procedure. However, if setting of short-cut unlocking authentication information for another specific application is not requested, the control unit 110 terminates the procedure of the setting of short-cut unlocking authentication information.

Having thus described exemplary embodiments of a method providing an unlocking operation in a portable terminal, it should be apparent to those skilled in the art that certain advantages of improving a user's convenience have been achieved. The foregoing is to be constructed as only being an illustrative embodiment of this invention. Persons skilled in the art can easily conceive of alternative arrangements providing a functionality similar to this embodiment without any deviation from the fundamental principles or the scope of this invention.

As described above, the method of unlocking operation in a portable terminal according to an exemplary embodiment of the present invention is provided in a program command form which can be executed in various computer means and can be recorded in a recording media readable in a computer. Here, the recording media readable in a computer includes a program command, data file, data structure, or their combination. The program command recorded in the recording media may be a program command specially designed for the present invention or any computer software disclosed to those skilled in the art. The recording media readable in a computer includes a hardware device specially configured for storing and executing a program command, such as a hard disk, magnetic media (floppy disk and magnetic tape), optical media (CD-ROM and DVD), magneto-optical media (floptical disk), ROM, RAM, and flash memory. The program command further includes a machine code generated by a compiler and a high level language code executable in a computer by using an interpreter. The hardware device may be configured with at least one software module to perform the operation according to the present invention.

## Claims

1. A method for unlocking screen in a mobile terminal having a touch screen, comprising:
detecting at least two touch event inputs in sequence on the touch screen during a locking screen mode;
converting the at least two touch event inputs in sequence to authentication information;
determining whether the converted authentication information is identical to a preset unlocking authentication information; and
unlocking the screen when the converted authentication information is identical to the preset unlocking authentication information.

2. The method of claim 1, wherein the at least two touch event inputs include at least one of a single touch and a multi touch.

3. The method of claim 1, wherein the determining step comprises:
identifying whether the at least two touch event inputs represent a short-cut command for executing a specific application; and
executing the specific application after unlocking the screen.

4. The method of claim 1, wherein the converting step comprises:
calculating the number of touch points in the respective touch event input,
wherein the authentication information is formed by joining the calculated number of touch points in the respective touch event input together.

5. The method of claim 1, wherein the detecting step includes providing at least one of a visual effect, auditory effect, and tactile effect in response to the respective touch event input.

6. The method of claim 1, wherein the preset unlocking authentication information is preprogrammed in response to at least one of a single touch and a multi touch detected on the touch screen or in response to a touch input made using a numeral keypad.

7. The method of claim 6, wherein preprogramming the preset unlocking authentication information comprises:
identifying whether a request for short-cut unlocking authentication information is made; and
displaying a screen for selecting an application icon so as to execute the corresponding application program when the request for the short-cut unlocking authentication information is made.

8. The method of claim 6, wherein preprogramming the preset unlocking authentication information includes converting the at least one of a single touch or a multi touch detected on the touch screen into a numeral value and displaying the converted numeral value on the touch screen.

9. An apparatus for unlocking screen in a mobile terminal, comprising:
a touch screen for displaying a locking screen; and
a control unit controlling the touch screen for detecting at least two touch event inputs, in sequence, converting the at least touch event inputs in sequence to authentication information, determining whether the converted authentication information is identical to a preset unlocking authentication information, and unlocking the screen when the converted authentication information is identical to the preset unlocking authentication information.

10. The apparatus of claim 9, wherein the touch event inputs includes at least one of a single touch and a multi touch.

11. The apparatus of claim 9, wherein the control unit identifies whether the at least two touch event inputs represent a short-cut command for executing a specific application, and executes the specific application after unlocking the screen.

12. The apparatus of claim 9, wherein the control unit calculates the number of touch points in the respective touch event input, and wherein the authentication information is formed by joining the calculated number of touch points in the respective touch event input together.

13. The apparatus of claim 9, wherein the control unit preprograms the preset unlocking authentication information in response to at least one of a single touch and a multi touch detected on the touch screen or in response to a touch input made using a numeral keypad.

14. The apparatus of claim 13, wherein the control unit identifies whether a request for short-cut unlocking authentication information is made, and controls the touch screen to display a screen for selecting an application icon so as to execute the corresponding application program when the request for the short-cut unlocking authentication information is made.

15. The apparatus of claim 13, wherein the control unit converts the at least one of a single touch or a multi touch detected on the touch screen into a numeral value and controls to the touch screen to display the converted numeral value.
